# EUROPEAN PATENT SPECIFICATION

(11) **EP 2 102 591 B1**
(45) Date of publication and mention of the grant of the patent: **19.04.2017**
(21) Application number: 07864107.3
(22) Date of filing: 08.11.2007
(51) Int. Cl.: G01C 21/36, G09B 29/10, G09B 29/00

(54) **VIRTUAL LOCATION MARKERS FOR MOBILE MAPPING**
VIRTUELLE ORTSMARKIERUNGEN FÜR MOBILE ABBILDUNG
MARQUEURS DE LOCALISATION VIRTUELS POUR CARTOGRAPHIE MOBILE

(30) Priority: 19.12.2006 US 641281
(43) Date of publication of application: 23.09.2009
(73) Proprietor: Microsoft Technology Licensing, LLC, Redmond, WA 98052 (US)
(72) Inventor: ZOLLER, David Ethan, Redmond, WA 98052-6399 (US); SWARTZ, Tanya L., Redmond, WA 98052-6391 (US)
(74) Representative: Goddar, Heinz J.
(86) International application number: PCT/US2007/084080
(87) International publication number: WO 2008/079536

(56) References cited:
- EP-A2- 1 691 211
- JP-A- H1 151 666
- US-A1- 2002 138 196

## Description

### BACKGROUND

Automotive navigation systems built into vehicles, and other mobile devices such as GPS-equipped handheld devices and phones, can provide mobile mapping services to users. For example, a user can view a map that regularly updates itself based on the user's current location, and can hear computer-generated directions and the like based upon a current location and a specified destination. Users (e.g., on a desktop personal computer) can also use the Internet to generate static a map and/or directions based upon a starting location and a specified destination.

Mobile mapping may include features similar those provided with desktop computing concepts. For example, desktop mapping applications often allow the placing of location marker icons (e.g., placeholders resembling "pushpins" or equivalent representations such as star-shaped or flag-shaped icons and so forth) on a displayed map to represent static, saved locations. Such marker locations may be directly user-specified such as by entering an address that maps to coordinates, or may be user-selected, such as by entering search criteria and then selecting a search result that causes a location marker to be shown on the map. While at times valuable, the user's selection of such location markers can result in too many location markers being visible while the user is in one area, or no relevant location markers appearing while in another area.

US 2002/138196 A1 discloses steps to travel to a destination along a calculated route, wherein points of interest along the route are only diplayed if they fall within a predefined corridor.

In JP H1151666 A, location data of a vehicle is observed.

EP 1691211 A2 discloses a process for selectively identifying one or more points of interest based on the passage of a predetermined time, a travel over a predetermined distance, or a change made to a point attribute. A map is disclosed for identification of these points.

### SUMMARY

According to the invention, a method for generating virtual location markers, as defined in claim 1, and a system in a computing environment having a mapping mechanism for presenting virtual location markers, as defined in claim 4, are provided.

Briefly, various aspects of the subject matter described herein are directed towards a technology by which a virtual location marker is determined, in which the virtual location marker corresponds to one (e.g., a first) coordinate set (such as a latitude and longitude and/or an altitude) to represent a point on a map. Upon detecting a state change, the virtual location marker may be re-determined, including changing the virtual location marker to correspond to another, (e.g., a second) coordinate set (a different latitude, longitude and/or altitude) that is different from the first coordinate set. As a result, unlike a fixed location marker, the coordinates of a virtual location marker may change in response to a state change, possibly long after an initial query. A state change may be a change in one or more of the following, including a current location, and/or a change in direction, speed, time, a start location, an end destination, or the contents of any searchable database or data store.

In one example embodiment, a preference mechanism obtains a query from a query input mechanism. Based on the query results, along with a data store set containing at least one data store, and dynamic data, a virtual location marker may be computed, and output, e.g., plotted on a map and/or used to provide audio directions or the like. The virtual location marker may be re-computed, such as based on a change to the dynamic data and/or to data from the data store set.

Thus, when processing a query directed towards identifying a location other than a current location, a virtual location marker may be computed from the results of the query to determine a first location corresponding to a - 3 - first coordinate set. The output corresponding to the virtual location marker may change upon detecting a state change that causes the location marker to be recomputed to correspond to a second coordinate set.

Other advantages may become apparent from the following detailed description when taken in conjunction with the drawings.

### BRIEF DESCRIPTION OF THE DRAWINGS

The present invention is illustrated by way of example and not limited in the accompanying figures in which like reference numerals indicate similar elements and in which:
FIGURE 1 shows an illustrative example of a general-purpose computing environment into which various aspects of the present invention may be incorporated.
FIG. 2 is a representation of an example map that may appear when a user is moving, including a virtual location marker that is computed based on current user state data.
FIG. 3 is a flow diagram showing an example of refreshing a cache with external data that may be used in computing virtual location markers.
FIG. 4 is a flow diagram showing an example of selectively updating a map and/or virtual location marker output based upon location or other state changes.

### DETAILED DESCRIPTION

Various aspects of the technology described herein are generally directed towards virtual location markers. As will be understood, a virtual location marker has a dynamically-computed location (e.g., a latitude and longitude or other coordinate system), rather than a static location. At any given instant in time a static location marker can be created from a virtual location marker and displayed on a map, with any other currently visible location marker possibly removed. Thus, unlike a static location marker which has fixed underlying coordinates, a virtual location marker can change its underlying coordinates. For example, a map can show a location marker for the closest coffee shop relative to the user's current location, which can change to show a different location marker as the user moves away from one coffee shop and closer to another.

In one example implementation, a virtual location marker typically comprises an image or the like such as an icon, with the virtual location marker dynamically computed to position its representative icon relative to the real-time location of a mapping-equipped device. Like a regular location marker, the virtual location marker thus appears to move on the screen as the user moves and the map is redrawn, however the virtual location marker can be computed to completely change its underlying coordinates and thus "jump" to a new relative location. Although in one drawing an icon representing a "pushpin" is used to represent a virtual location marker, it is understood that a virtual location marker is not limited to an image resembling any particular shape, or even to a visible image, but rather may be any practical image, audible sound or the like that can convey the concept of a location to a user that is viewing a map and/or is listening to audio directions based on map data.

As such, the present invention is not limited to any particular embodiments, aspects, concepts, structures, functionalities or examples described herein. Rather, any of the embodiments, aspects, concepts, structures, functionalities and/or examples described herein are nonlimiting, and the present invention may be used various ways that provide benefits and advantages in computing and networking in general.

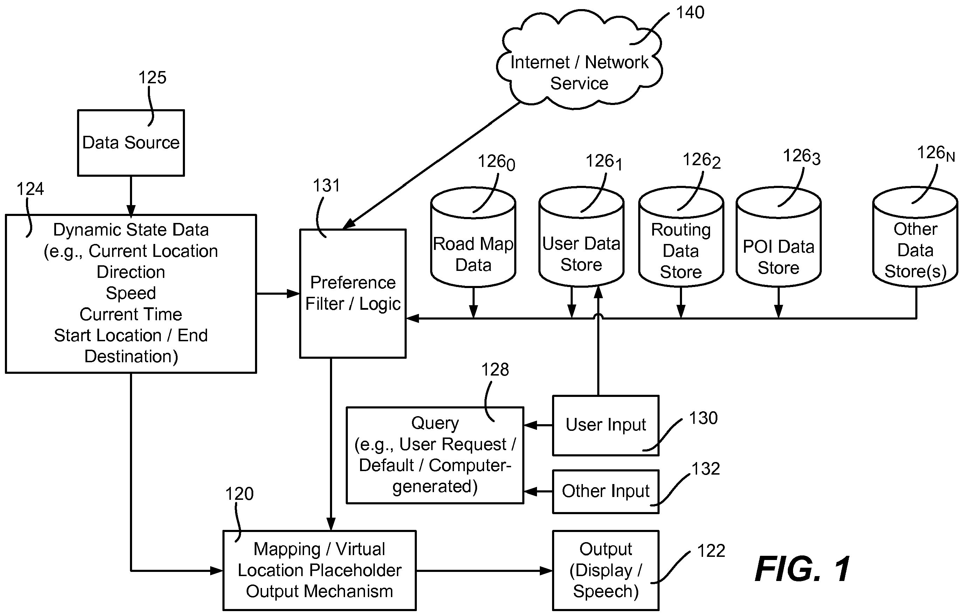

FIG. 1 shows an example block diagram in which an output mechanism 120 (e.g., a virtual location marker generator combined or otherwise associated with a conventional map and fixed location marker generator) outputs visible information and/or audible information corresponding to map-related data to an output device 122. For example, the visible information may be in the form of graphics, video and/or text, which the audible information may be in the form of speech and or other sounds (such as beeps that change repetition frequency and/or pitch as a location is approached). The map-related data may be accessed from road map data 126₀ and rendered in the form of an image showing nearby streets relative to a current location or otherwise specified location, and/or may include spoken directions.

Unlike conventional static location markers, the location marker technology described herein is capable of generating a location marker based on a request for data and on dynamic state data 124, (e.g., from any suitable data source 125) as well as other data, such as user preference data, e.g., maintained in a user data store 126₁. As represented in FIG. 1, the dynamic state data 124 may include the user's current location, direction and speed, as well as the current time or other changes in backing data. As can be readily appreciated, current location may be determined from GPS coordinates using a GPS-enabled mechanism as the data source 125, (with speed and direction derived from GPS coordinate changes), although it is understood that other means of determining location such as cell phone triangulation and/or proximity detection may be employed. Note however that while the location may be in absolute coordinates such as latitude and longitude, location may also include the concept of logical location, e.g., just past Exit 123 with no ability to turn around until Exit 125 is reached. Start and end destination data also may be considered as dynamic data, e.g., input by the user or otherwise statistically or historically determined, e.g., every Monday through Friday at eight in the morning the user travels from home (the current at rest location) to work.

A query 128 or the like may be used to cause generation of a virtual location marker (or multiple virtual location markers), with the query possibly submitted by a user, such as to "find a coffee shop on my route" from a current location to a submitted destination. A user input mechanism 130 may be used to provide such a query. A query may be a one-time event, or programmed to reoccur. A user may also re-query or parse through query results, such as to cycle through one or more alternative results when the current result does not meet the user's expectations. Alternatively, a query 128 may be provided by default; e.g., a device manufacturer may include one or more queries or query results corresponding to defined points of interest. Further, the query 128 may be computer generated, such as a vehicle's computer that requests a virtual location marker be displayed to represent a gasoline station when the vehicle's gasoline tank gets below a threshold level. Such other types of query input are represented in FIG. 1 via the block 132.

Unlike a static location marker, a user need not select a location (e.g., corresponding to a business) and fix it on a map based on its associated coordinates. Instead, based on the query 128, preference filter / logic (comprising a preference mechanism) 131 re-computes query results, typically based on some or all of the dynamic state data. Thus, for example, a user may query for a coffee shop, resulting in a virtual location marker appearing at a location on the map that corresponds to the nearest coffee shop, but then have that location marker disappear and be replaced by a newly-computed one as the user moves and thereby becomes closer to a different one.

The preference filter / logic 131 (which is coupled to the output mechanism 120) may use the dynamic state data 124 and other relevant data 126₁-126_{N} to determine whether to output a virtual location marker for a given query. For example, to keep from having undesirable location markers generated and displayed on an automotive navigation system display, the user data store 126₁ may specify that a location marker for a gasoline station not be generated / displayed except in a state in which the vehicle's gasoline tank is below one-eighth full, and only when a location that provides a certain brand of gasoline is available on the user's route. Other filtering criteria including as time may be used, e.g., a user may not want a location marker generated as a reminder to pick up dry cleaning until the dry cleaning is supposed to be ready, e.g., after 3 PM; note that this information may be found by accessing the user's task data, represented as part of the user data store 126₁. The user data store 126₁ may reside locally on the mapping device, such as accessed via the input mechanism 130 of the user device, or may be remotely located, e.g., accessed over the Internet 140 via the input mechanism 130 or another means, such as a browser on a desktop computer. Often (but not necessarily always) at least a copy of such user data is present locally for access when no network / Internet connection is present.

As also represented in FIG. 1, various other data stores 126₂-126_{N} may be maintained (or offline cached) in the device and/or remotely accessed on demand. Such data stores may include those accessed via the Internet 140 or other network service such as a service offered by a cellular phone service. Essentially any relevant data may be used to determine whether to generate a virtual location marker, based on some or all of the dynamic state data 124 and any other relevant dynamic or relatively static data. Thus, as used herein, "data store set" refers to any relevant dynamic and/or relatively static maintained in any storage, including the Internet or similar network. Note that for purposes of clarity, the data store set can be considered separate from the dynamic state data 124 obtained via the data source 125.

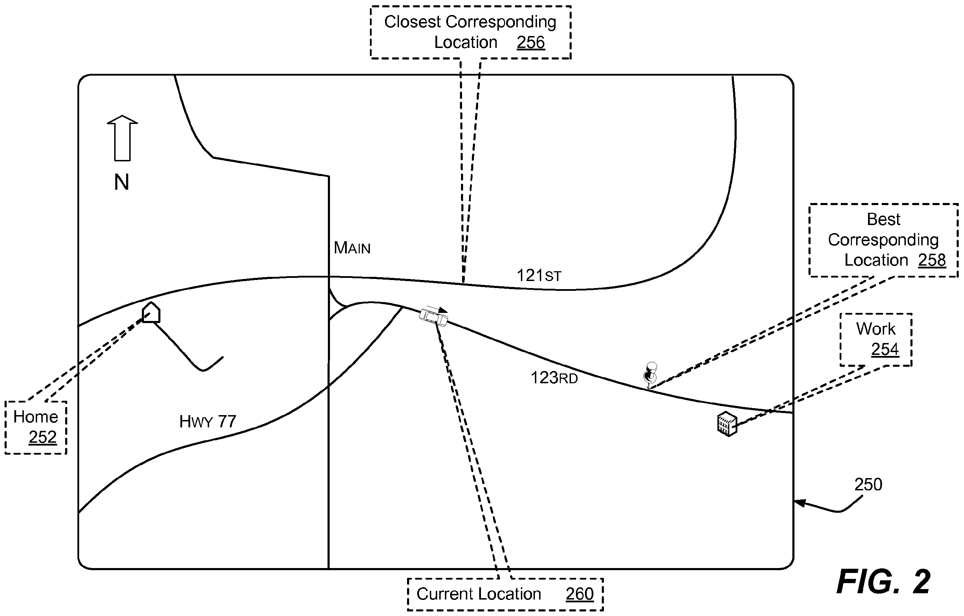

By way of example, returning to the above coffee shop query example, but using the example map 250 represented in FIG. 2, a user may request a location marker be generated for a coffee shop. Note that in FIG. 2, the "Home," "Work," "Current Location," "Best Corresponding Location" and "Closest Corresponding Location" balloons containing captions and numeric labels are dashed to indicate that they are not actually visible. Further, note that icons 252 and 254 representing "Home" and "Work" respectively may be static location markers relative to a particular user, not virtual location markers, as such locations relatively rarely (if ever) change for each user, and can thus be considered static; note that both types of markers may be displayed on the same map 250.

In response to the "find a coffee shop query," actual coordinates found in a data store search may locate the closest coffee shop, as well as possibly many other coffee shops. However certain ones, including the physically closest one, represented in FIG. 2 as the "Closest Corresponding Location" 256 may not be on the user's current route, e.g.,, from home to work. In this example, a routing data store 126₂ is accessed to obtain information that filters out those results not on the user's current route; a virtual location marker is thus generated and displayed at the "Best Corresponding Location" 258 according to a combination of proximity to the user's current location 260, and the route. Routing data in conjunction with location and direction state data can also be used in the computation of a virtual location marker for output, e.g., whether a freeway exit is available to a query-matched location, and if so, whether the user can exit and also get back on, whether the location is ahead or requires turning around, and so forth.

Many other examples of data stores that provide data may be used for filtering purposes. For example, a point-of-interest (POI) data store 126₃ may provide well known or important landmarks. A user may want such point-of-interest locations virtualized into location markers at one time, such as when driving a visitor around a city, but not at other times, such as when driving to work. Note that point-of-interest markers may be combined with audio that provides a "tour" scenario as different landmarks are approached.

Other data stores 126_{N} are also shown in FIG. 1, to represent essentially any relevant data that can be used to select a particular location for displaying a virtual location marker from among a set of available results. Among the many possible examples include computing the fastest driving time to a location, such as by road distance, road speed limits and/or current traffic conditions (whether on-demand downloaded traffic conditions or predicted traffic conditions based on date / time-of-day, statistics, and so forth). Rating services may be accessed, e.g., find the nearest highly-rated restaurant near my client meeting; the client meeting location may be derived from the user's calendar data.

Contacts data may also serve to generate a location marker. For example, if a user has contacted a friend and is near that friend's house or appears to be on the way there, a virtual location marker may be generated to indicate the location of that friend's house and/or suggest providing directions thereto. Alternatively, lack of recent contact with a physically nearby contact's location can generate a virtual location marker, e.g., when a user has not recently visited a contact (such as stored by a navigation computer based on time spent at those coordinates), and/or based on phone data that indicates the user has not called or been called by a contact.

Calendar and task data are other examples of user data that may be used to compute a virtual location marker. For example, a task such as pick up dry cleaning may be used to generate a virtual location marker at a location where the dry cleaning was dropped off, whereas a task such as drop off dry cleaning may show the nearest dry cleaner. Note that non-location-related tasks (e.g., call home) ordinarily would not result in location marker generation. Calendar and current time data may be used to generate a virtual location marker, e.g., a virtual location marker automatically appears at an offsite meeting location when it is time to start heading for the meeting. Task, time and calendar data may be combined, e.g., do not show location marker icon for picking up the dry cleaning when it is before 3 PM, or when the user's calendar indicates there is not sufficient time to stop.

Businesses and other enterprises may provide relevant information, such as via a defined schema used when generating a query and/or filtering its results with respect to virtual location marker computations. For example, virtual location marker computations may factor in whether a store is currently open based on the current time, whether the business has a drive through, whether cash, checks and/or credit cards are accepted, (and if so, which ones, and whether there is room on the user's limit for each that will be accepted). Other business criteria can include whether the desired business sells related accessories, does the business have everything needed (e.g., a grocery store with a pharmacy, whether the pharmacy takes insurance, does a filling station have diesel fuel, and so forth).

Price data (e.g., current price, an available discount and so forth) may be accessed as state data, whether currently accessed or recently cached, such as to find the cheapest gasoline on the current route. Additional computations such as whether the savings is justified by the extra distance and time may be used to select one virtual marker over another. These additional computations may be according to user preference data, miles per gallon, and so forth.

Another type of data corresponds to preferred business data. For example, a business may contract with a mapping company so that its products or services are preloaded or weighted when computing a virtual location marker, instead of computing a marker for another business that may likewise meet a query's criteria. For example, via computation weighting, a query to locate a hotel room may come up with virtual location marker for a particular hotel chain, even though another hotel may be closer. User preference data (e.g., favoring one hotel where the user has privileges), state data (e.g., vacancy or not), and practicality (e.g., a user does not want to receive directions to a hotel fifty miles away when one is a mile away) may supersede preferred business recommendations.

The representation of a virtual location marker can also convey information to a user. For example, instead of a generic pushpin icon or the like as a marker, the icon's appearance may be selected so as to distinguish a gasoline station versus a coffee shop. The user may select icons from a set, which may be downloaded. A company may pay to have its logo or custom icon appear as a virtual location marker. Other information may be conveyed by the icon's appearance, such as to fade one icon out as the map moves away from its location, and fade another one in as the user approaches its location. An icon's appearance may blink, flash, grow, shrink, change color and so forth to convey information.

Another aspect of virtualized location markers is that certain markers can be predefined, such as home and work. During installation, for example, a user may provide a home and work address, whereby virtualized location markers are generated at those locations, and possibly converted to fixed location markers. Thereafter, when seeking closest to home, closest to work and so forth, a user will not need to re-enter the same information.

Further, a user may specify start and end locations, along with some number of virtual location markers to generate relative to the user's current location. For example, the best coffee shop based on the route, and the best gasoline station based on the route, current price (but only when the tank is below a threshold) may be two that the user regularly wants to see, when relevant. A third may be to select an errand from the user's personal task list that can be accomplished on the route, or by detouring within some number of feet of the route.

Note that mobility is not needed with respect to generation of virtual location markers, and indeed, current location is only an optional input. For example, a user may request that a mapping service compute the closest florist to home, even when the user is not at home and/or is stationary. What is basically needed is a query plus sufficient data (e.g., home plus closest florist) to narrow that query to generate at least one virtual location marker that matches the user's expectations.

Virtual location markers can also be computed to satisfy queries relative to another device, e.g., to determine where the children are now, to materialize only when the children are outside of a predefined boundary or are exceeding the speed limit, and so forth.

Similarly, a device can output information as a user hones in on a location marker, such as to automatically notify a business that the user having a particular identifier will be arriving in an estimated time of five minutes, and would like a usual order placed, charging the usual account. Estimated times of arrival can be updated as time and other (e.g., traffic) conditions change. A business can track live customer locations to time / match orders as customers arrive.

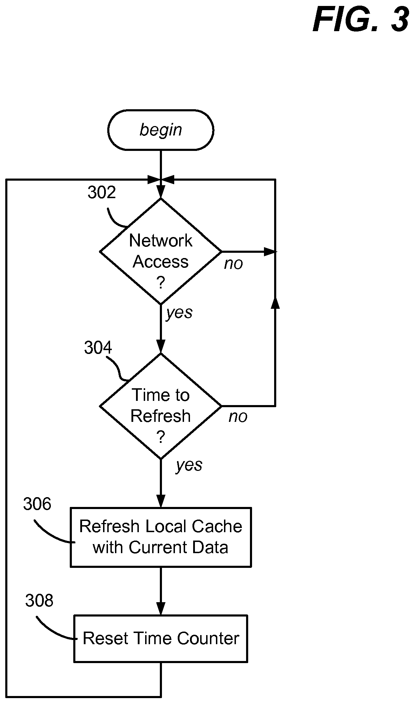

By way of summary, essentially, any dynamic and/or or relatively static data may be used in a computation of a virtual location marker. As described above, for dynamic data from a remote source such as the Internet, a local cache can simulate live data, at least when refreshed relative recently, (and cached data can expire if not). For example, FIG. 3 shows the concept of a device refreshing its data (step 306) when network access is available (step 302), but only on a scheduled or other such basis (steps 304 and 308). For example, instead of relying on a client timeout, if the server is pushing new content, step 304 can consider this as a time to refresh, whereby new data may appear automatically based on a server-side push notification. The schedule may refresh relatively often or relatively infrequently as set by default or by a user, or upon some other condition (e.g., server pushing new content, a forced refresh, low battery, access is presently expensive, and so forth).

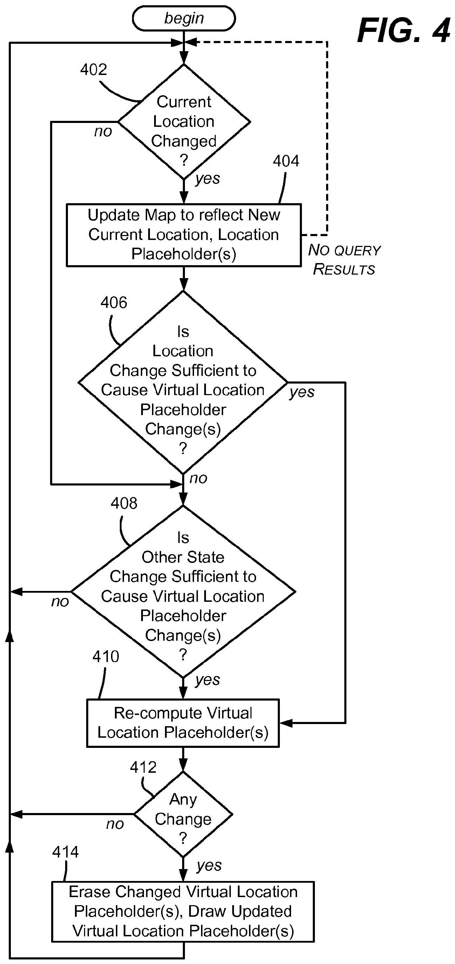

FIG. 4 is a flow diagram showing simplified, example logic that may be used to update a map, including determining whether and when to re-compute one or more virtual location markers. The logic of FIG. 4 may begin used any time, including when new or initial query results are available, and thus can begin upon device startup, vehicle movement, and/or receiving a query and its results.

For example, step 402 represents determining whether the current location has changed; if so, the map is updated at step 404 to show the new location and the current markers. Steps 402 and 404 may happen relatively frequently, e.g., each time the user device moves a certain distance, as in conventional mapping scenarios. If no query results are available (or still apply) with respect to virtual location markers, step 404 can return to step 402 (e.g., the dashed line, possible after some delay) until query results exist.

If the location has changed, step 406 determines whether the location change is sufficient to cause re-computation of a virtual location marker. If so, the process branches ahead to step 410 to re-compute the virtual location marker markers based on the new location, any other current state, and other data such as user preferences. Note that although step 410 refers to a re-compute operation, it can be readily appreciated that this step also represents any first time computation, such as by evaluating query results before virtual location markers presently have been computed. Further, the re-computation step 410 may include issuing a new query to obtain possibly different query results or additional query results.

With respect to a location change not being sufficient to cause a change at step 406, it can be readily appreciated that there may be a number of factors that prevent or at least delay the virtual location markers from being re-computed. For example, a user may not want to see a sudden change or receive a sudden change in directions when the user is very close to arriving at a current virtual location marker. This is true even when a new virtual location marker would be computed, for example, because the user may have moved into a turn lane in response to a previous instruction; indeed, the turn itself based on the instruction may cause the location change. Some dampening heuristics thus may be applied to avoid sudden virtual location marker changes in response to minor location changes.

Step 408 similarly evaluates whether another (non-location) state change is sufficient to cause re-computation of at least one virtual location marker. Such other state may be time, speed, direction, weather, and essentially anything else that can change, including a user or other change to otherwise static data. If so, the process branches ahead to step 410 to re-compute the virtual location marker or markers based on the current state change, the current location, any other current state, and other data such as user preferences. Again, this allows for dampening heuristics to be applied, e.g., a user may not want to suddenly see or hear new directions because the price of gasoline just dropped a penny per gallon at a different location. Note that time can be a sufficient state change, whereby, for example, virtual location markers are updated even if the user is stationary.

Steps 412 and 414 update the virtual location marker or markers as necessary based on the computation at step 410.

In this manner, a user or other mechanism pre-builds a query, and a virtual location marker automatically materializes at an appropriate location and/or appropriate time. This provides the user with a result as needed. As the user moves, so may any location marker, and the location marker can change to another location without needed to query again. Other factors such as dynamic and static state data can cause a change, including when the user's device is not moving.

While the invention is susceptible to various modifications and alternative constructions, certain illustrated embodiments thereof are shown in the drawings and have been described above in detail. It should be understood, however, that there is no intention to limit the invention to the specific forms disclosed, but on the contrary, the intention is to cover all modifications, alternative constructions, and equivalents falling within the scope of the claims.

## Claims

1. A method for generating virtual location markers associated with a respective coordinate and represented by visible points on a map, comprising:
if a change of a current user location is detected (402), updating (404) the map to reflect the new current user location, and determining (406) if the change of the current user location is sufficient to cause re-computation of a virtual location marker;
if a change of the current user location is determined to be sufficient to cause re-computation of the virtual location marker, re-computing (410) the virtual location marker,
and updating the re-computed virtual location marker on the map (414);
otherwise, only if no change of the current user location is detected (402) or a change of the current user location is determined (406) to be insufficient to cause re-computation of a virtual location marker, determining (408) if a change of data associated with the virtual location marker is detected; and
if a change of data associated with the virtual location marker is determined (408), re-computing (410) the virtual location marker, and updating the virtual location marker on the map (414).

2. The method of claim 1, further comprising outputting a representation of the virtual location marker based on the respective coordinate, and in response to the change of the current user location or the change of data associated with the virtual location marker, changing (414) the output of the representation based on the respective coordinate or changing (414) at least one appearance characteristic of the representation.

3. The method of claim 1, wherein re-computing (410) the virtual location marker comprises:
evaluating data corresponding to at least one item in a set, the set containing traffic data (132), route data (126₂), point of interest data (126₃), price data or ratings data or
evaluating user data (126₁) corresponding to at least one item in a set, the set containing user preference data, user task data, user contacts data, user historical data, and user calendar data.

4. In a computing environment having a mapping mechanism for presenting virtual location markers associated with a respective coordinate and represented by visible points on a map, a system comprising:
logic adapted to perform the steps according to claim 1.

5. The system of claim 4, further comprising an output mechanism (122) adapted to output a visible representation of the virtual location marker and audio based on the virtual location marker.

6. The system of claim 4, further comprising a data store set (126₀-126_{N}) containing data corresponding to at least one item in a set, the set containing user data, Internet data, traffic data, route data, point of interest data, price data, business-provided data, or ratings data.

7. The system of claim 6, wherein at least part of the data store set is maintained in a local cache, and wherein at least part of the local cache may be refreshed (306) via a connection to a network.

8. The system of claim 4, further comprising a query input mechanism comprising a user input mechanism (130), or a query-generation mechanism (132), or both a user input mechanism (130) and a query-generation mechanism (132).

## Patentansprüche

1. Verfahren zur Erzeugung von virtuellen Ortsmarkierungen, die zu einer jeweiligen Koordinate gehören und durch sichtbare Punkte auf einer Karte dargestellt sind, umfassend:
wenn eine Änderung eines gegenwärtigen Benutzerorts detektiert wird (402), Aktualisieren (404) der Karte, um den neuen gegenwärtigen Benutzerort wiederzugeben, und Ermitteln (406), ob die Änderung des gegenwärtigen Benutzerorts ausreicht, um eine Neuberechnung einer virtuellen Ortsmarkierung zu veranlassen;
wenn ermittelt wird, dass eine Änderung des gegenwärtigen Benutzerorts ausreicht, um ein Neuberechnen der virtuellen Ortsmarkierung zu bewirken, Neuberechnen (410) der virtuellen Ortsmarkierung,
und Aktualisieren der neu berechneten virtuellen Ortsmarkierung auf der Karte (414);
anderenfalls, nur wenn keine Änderung des gegenwärtigen Benutzerorts detektiert wird (402) oder ermittelt wird (406), dass eine Änderung des gegenwärtigen Benutzerorts nicht ausreicht, um ein Neuberechnen einer virtuellen Ortsmarkierung zu veranlassen, Ermitteln (408), ob eine Änderung von Daten, die zur virtuellen Ortsmarkierung gehören, detektiert wird;
wenn eine Änderung von Daten, die zur virtuellen Ortsmarkierung gehören, ermittelt wird (408), Neuberechnen (410) der virtuellen Ortsmarkierung und Aktualisieren der virtuellen Ortsmarkierung auf der Karte (414).

2. Verfahren nach Anspruch 1, ferner umfassend Ausgeben einer Darstellung der virtuellen Ortsmarkierung basierend auf der jeweiligen Koordinate und als Reaktion auf die Änderung des gegenwärtigen Benutzerorts oder die Änderung von Daten, die zur virtuellen Ortsmarkierung gehören, Ändern (414) der Ausgabe der Darstellung basierend auf der jeweiligen Koordinate oder
Ändern (414) zumindest einer Erscheinungseigenschaft der Darstellung.

3. Verfahren nach Anspruch 1, wobei Neuberechnen (410) der virtuellen Ortsmarkierung umfasst:
Auswerten von Daten, die mindestens einen Element in einem Satz entsprechen, wobei der Satz Verkehrsdaten (132), Routendaten (126₂), Daten von Sehenswürdigkeiten (126₃), Preisdaten oder Bewertungsdaten enthält, oder
Auswerten von Benutzerdaten (126₁), die mindestens einem Element in einem Satz entsprechen, wobei der Satz Benutzerpräferenzdaten, Benutzeraufgabendatum, Benutzerkontaktdaten, Benutzerhistoriedaten und Benutzerkalenderdaten enthält.

4. In einer Rechnerumgebung mit einer Karteneinrichtung zum Präsentieren von virtuellen Ortsmarkierungen, die zu einer jeweiligen Koordinate gehören und durch sichtbare Punkten auf einer Karte dargestellt werden, ein System, umfassend:
Logik, die gestaltet ist, um die Schritte nach Anspruch 1 durchzuführen.

5. System nach Anspruch 4, ferner umfassend eine Ausgabeeinrichtung (122), die gestaltet ist, um eine sichtbare Darstellung der virtuellen Ortsmarkierung und Ton basierend auf der virtuellen Ortsmarkierung auszugeben.

6. System nach Anspruch 4, ferner umfassend einen Datenspeichersatz (126₀-126_{N}), der Daten enthält, die mindestens einem Element in einem Satz entsprechen, wobei der Satz Benutzerdaten, Internetdaten, Verkehrsdaten, Routendaten, Daten von Sehenswürdigkeiten, Preisdaten, geschäftsüberlassene Daten oder Bewertungsdaten enthält.

7. System nach Anspruch 6, wobei mindestens ein Teil des Datenspeichersatzes in einem lokalen Cache gehalten wird und wobei mindestens ein Teil des lokalen Cache über eine Verbindung mit einem Netzwerk aktualisiert werden kann.

8. System nach Anspruch 4, ferner umfassend eine Suchanfrageeingabeeinrichtung mit einer Benutzereingabeeinrichtung (130) oder einer Suchanfrageerzeugungseinrichtung (132) oder sowohl einer Benutzereingabeeinrichtung (130) und einer Suchanfrageerzeugungseinrichtung (132).

## Revendications

1. Procédé pour la génération de marqueurs de localisation virtuels associés avec une coordonnée respective et représentés par des points visibles sur une carte, comprenant :
si un changement de la localisation actuelle de l'utilisateur est détecté (402), mise à jour (404) de la carte pour refléter la nouvelle localisation actuelle de l'utilisateur et détermination (406) si le changement de la localisation actuelle de l'utilisateur est suffisant pour provoquer un nouveau calcul d'un marqueur de localisation virtuel ;
si un changement de la localisation actuelle de l'utilisateur est déterminé comme étant suffisant pour provoquer un nouveau calcul du marqueur de localisation virtuel, nouveau calcul (410) du marqueur de localisation virtuel, et mise à jour du marqueur de localisation virtuel recalculé sur la carte (414) ;
sinon, uniquement si aucun changement de la localisation actuelle de l'utilisateur n'est détecté (402) ou si un changement de la localisation actuelle de l'utilisateur est déterminé (406) comme étant insuffisant pour provoquer un nouveau calcul d'un marqueur de localisation virtuel, détermination (408) si un changement de données associées au marqueur de localisation virtuel est détecté ; et
si un changement de données associées au marqueur de localisation virtuel est déterminé (408), calcul (410) du marqueur de localisation virtuel et mise à jour du marqueur de localisation virtuel sur la carte (414).

2. Procédé selon la revendication 1, comprenant en outre la génération d'une représentation du marqueur de localisation virtuel sur la base de la coordonnée respective et, en réponse au changement de la localisation actuelle de l'utilisateur ou au changement des données associées au marqueur de localisation virtuel, changement (414) de la sortie de la représentation sur la base de la coordonnée respective ou changement (414) d'au moins un aspect caractéristique de la représentation.

3. Procédé selon la revendication 1, dans lequel le nouveau calcul (410) du marqueur de localisation virtuel comprend :
l'évaluation des données correspondant à au moins un élément dans un ensemble, cet ensemble contenant des données de trafic (132), des données d'itinéraire (126₂), des données de points d'intérêt (126₃), des données de prix ou des données de notation ou
l'évaluation des données d'utilisateur (126₁) correspondant à au moins un élément dans un ensemble, cet ensemble contenant des données de préférences de l'utilisateur, des données de tâches de l'utilisateur, des données de contacts de l'utilisateur, des données historiques de l'utilisateur et des données de calendrier de l'utilisateur.

4. Dans un environnement informatique comprenant un mécanisme de cartographie pour la représentation de marqueurs de localisation virtuels associés à une coordonnée respective et représentés par des points visibles sur une carte, un système comprenant :
un circuit logique conçu pour exécuter les étapes selon la revendication 1.

5. Système selon la revendication 4, comprenant en outre un mécanisme de sortie (122) conçu pour générer une représentation visible du marqueur de localisation virtuel et un signal audio basé sur le marqueur de localisation virtuel.

6. Système selon la revendication 4, comprenant en outre un ensemble de stockage de données (126₀-126_{N}) contenant des données correspondant à au moins un élément dans un ensemble, cet ensemble contenant des données de l'utilisateur, des données Internet, des données de trafic, des données d'itinéraires, des données de points d'intérêt, des données prix, des données fournies des entreprises ou des données de notation.

7. Système selon la revendication 6, dans lequel au moins une partie de l'ensemble de stockage de données est maintenue dans une mémoire cache locale et dans lequel au moins une partie de la mémoire cache locale peut être rafraîchie (306) via une connexion à un réseau.

8. Système selon la revendication 4, comprenant en outre un mécanisme d'entrée de recherche comprenant un mécanisme d'entrée d'utilisateur (130) ou un mécanisme de génération de requête (132) ou bien un mécanisme d'entrée d'utilisateur (130) et un mécanisme de génération de requête (132).
